# EUROPÄISCHE PATENTSCHRIFT

(11) **EP 2 886 720 B1**
(45) Veröffentlichungstag und Bekanntmachung des Hinweises auf die Patenterteilung: **30.05.2018**
(21) Anmeldenummer: 14193829.0
(22) Anmeldetag: 19.11.2014
(51) Int. Cl.: E01C 23/088, B65G 15/16

(54) **Baumaschine, sowie ein Verfahren zum Abfräsen und Abtransportieren eines abgefrästen Materialstroms einer Baumaschine**
Construction machine, and method for milling and transporting a flow of milled material of a construction machine
Engin et procédé de fraisage et de transport d'un flux de matériau enlevé à l'aide d'un engin

(30) Priorität: 20.12.2013 DE 102013226981
(43) Veröffentlichungstag der Anmeldung: 24.06.2015
(73) Patentinhaber: Wirtgen GmbH, 53578 Windhagen (DE)
(72) Erfinder: Berning, Christian, 50321 Brühl (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 249 084
- EP-A1- 2 113 613
- DE-A1- 3 429 940

## Beschreibung

Die Erfindung betrifft eine selbstfahrende Baumaschine, insbesondere Kaltfräse, Recycler, Surface Miner nach dem Oberbegriff des Anspruchs 1 bzw. ein Verfahren zum Abfräsen und Abtransportieren eines abgefrästen Materialstroms nach dem Oberbegriff des Anspruchs 11.

Beim Abtragen von Boden- oder Straßenmaterial mit einer Straßenfräsmaschine entsteht Fräsgut, das mittels einer Fördereinrichtung von der Straßenfräsmaschine auf ein Transportfahrzeug verladen wird (vgl. beispielsweise EP 2 113 613 A1). Die Fördereinrichtung kann dabei ein oder mehrere Transportbänder aufweisen, die das Material von der Fräswalze aufnehmen und an einem Abwurfende entlang einer Abwurfparabel abladen. Die Verladung des Fräsgutes erfolgt im laufenden Betrieb, d. h. während die Straßenfräsmaschine und das Transportfahrzeug in Bewegung sind. Dabei ist es von Bedeutung, das Fräsgut kontrolliert auf das Transportfahrzeug zu überführen, weil ansonsten das abgefräste Material nicht auf eine gewünschte Abwurfstelle abgeladen wird und den vorbeifließenden Verkehr beeinträchtigen kann, oder falls das Fräsgut nicht vollständig auf der Ladefläche des Transportfahrzeugs landet, zusätzliche Kehrarbeit verursacht.

Um den Materialstrom zu lenken, kann zumindest der in Förderrichtung letzte Teil der Fördereinrichtung vorzugsweise seitlich und/oder in der Höhe schwenkbar gelagert sein, wobei zusätzlich mit Hilfe der Einstellung der Fördergeschwindigkeit, die Wurfparabel beeinflusst werden kann.

Die Eigenschaften des abgefrästen Materials sind je nach Aufgabenstellung, z. B. Feinfräsen oder Ausbau kompletter Straßenbeläge, sowie von den eingestellten Betriebsparametern, z. B. die Vorschubgeschwindigkeit der Straßenfräsmaschine, die Frästiefe und die Art des abgefrästen Materials, unterschiedlich.

Insbesondere kann die Menge des je Zeiteinheit abgefrästen Materials, sowie dessen Zusammensetzung und die Größe der Fräsgutbruchstücke unterschiedlich sein.

Bekannt ist grundsätzlich die Verladung des abgefrästen Materials auf ein Transportfahrzeug mittels eines oder mehrerer aufeinanderfolgender Transportbänder.

Bei Steilförderern ist es auch bekannt, einen Doppelgurt-Bandförderer zu verwenden (EP 0 249 084).

Bei den bei Straßenfräsmaschinen bekannten einfachen Transportbändern kann sich aufgrund der Inhomogenität des Fräsgutes und der sich ändernden Menge des Fräsgutes ein diskontinuierlicher Materialstrom entstehen.

Dies ist darin begründet, dass je nach Größe der Bruchstücke des abgefrästen Materials eine Relativbewegung der Bruchstücke untereinander und zum Transportband entstehen kann, nämlich insbesondere, wenn sich besonders viel oder besonders wenig Fräsgut auf dem Transportband befindet, oder bei schollenartigen Bruchstücken des abgefrästen Materials.

Zwischen dem abgefrästen Material und dem Transportband kann ein variierender Schlupf entstehen, und zwar insbesondere bei einer hohen Geschwindigkeit des Transportbandes. Dies hat zur Folge, dass es zu unterschiedlichen Austrittsgeschwindigkeiten einzelner Bestandteile des abgefrästen Materials kommen kann, wobei außerdem von der vorgesehenen Wurfparabel abweichende Flugbahnen der unterschiedlichen Bruchstücke des abgefrästen Materials entstehen können. Eine weitere Folge ist, dass die effektive Austrittsgeschwindigkeit im Mittel niedriger ist, als die Geschwindigkeit des Transportbandes, wodurch ein Energieverlust entsteht.

Außerdem ist ein verlangsamter Materialstrom anfälliger gegen äußere Beeinflussung, wie beispielsweise quer zum Transportband wirkende Windlasten, da die kinematische Energie in Förderrichtung verringert ist.

Der Erfindung liegt daher die Aufgabe zugrunde, eine Baumaschine, sowie ein Verfahren zum Abfräsen und Abtransportieren eines abgefrästen Materialstroms einer Baumaschine anzugeben, bei der der Abwurf des abgefrästen Materials besser berechenbar und reproduzierbarer einstellbar ist.

Zur Lösung dieser Aufgabe dienen die Merkmale des Anspruchs 1 bzw. 11.

Die Erfindung sieht in vorteilhafter Weise vor, dass zumindest der in Förderrichtung letzte Abschnitt der Fördereinrichtung mindestens ein endlos umlaufendes über dem Transportband angeordnetes Deckband aufweist, das sich im Wesentlichen parallel zu dem Transportband erstreckt und gegen das abgefräste Material auf dem Transportband zumindest in einem Teilstück der Länge des Transportbandes anliegt.

Die Erfindung hat folgende Vorteile:
Durch die Anordnung mindestens eines Deckbandes über dem Transportband kann die Form und Richtung sowie Bündelung des Materialstroms präziser eingestellt werden. Insgesamt lässt sich eine höhere und homogenere Abwurfgeschwindigkeit des abgefrästen Materials erreichen und eine genauere Einstellung der Abwurfgeschwindigkeit, zumal eine bessere Kraftübertragung von dem Transportband zu dem abgefrästen Material in dem Sinne erfolgen kann, dass weniger Schlupf auftritt.

Seitliche Abdichtungen, die bisher benötigt wurden und Reibungsverluste am Transportband erzeugten, werden vermieden, da die Abdichtung nun durch das aufliegende Deckband gewährleistet wird. Insgesamt ergibt sich eine bessere Energieeffizienz, wobei der Kraftstoffverbrauch reduziert werden kann und gesetzliche Vorgaben auch hinsichtlich der Schadstoffemission besser eingehalten werden können.

Bei einer bevorzugten Ausführungsform ist vorgesehen, dass die Fördereinrichtung oder der letzte Abschnitt der Fördereinrichtung hinsichtlich Neigung und/oder seitlicher Ausrichtung schwenkbar an dem Maschinenrahmen angeordnet ist.

Vorzugsweise ist das Deckband federnd in Richtung auf das Transportband vorspannbar. Dabei kann die Anpresskraft auch durch das Eigengewicht des Deckbandes erzeugt werden.

Bei einer bevorzugten Ausführungsform ist vorgesehen, dass das Deckband höhenverstellbar und/oder in Richtung auf das Transportband vorspannbar gelagert ist. Die federnde Lagerung ermöglicht es, einen Teil des Gewichtes des Deckbandes zu kompensieren oder die Vorspannung gegenüber der Gewichtsbelastung sogar zu erhöhen oder auch nur den unteren Trum dynamisch gegen das abgefräste Material auf dem Transportband anzudrücken.

Bei einer Weiterbildung der Erfindung ist vorgesehen, dass das Transportband abknickbar ist, wobei in einer Transportstellung ein vorderer, in Förderrichtung letzter Teil des Transportbandes nach unten verschwenkbar ist. Zu diesem Zweck kann das Deckband vorzugsweise geteilt ausgeführt sein, so dass insgesamt zwei hintereinander angeordnete Deckbänder über dem Transportband angeordnet sind. Dabei ist das in Transportrichtung letzte Deckband gemeinsam mit dem vorderen Teil des Transportbandes vorzugsweise nach unten abknickbar. Auf diese Weise kann die Transportlänge einer Straßenfräsmaschine signifikant verringert werden.

Das Deckband kann auch nur im Bereich des abknickbaren vorderen Teils des Transportbandes angeordnet sein.

Bei einer bevorzugten Ausführungsform ist vorgesehen, dass das Transportband Stützrollen für den oberen und unteren Trum aufweist, und dass die Stützrollen für den oberen Trum des Transportbandes in einer orthogonal zur Förderrichtung verlaufenden Ebene auf dem oberen Trum des Transportbandes eine im Querschnitt konkave Transportrinne bilden.

Gemäß einer Weiterbildung ist vorgesehen, dass das Deckband Stützrollen für den oberen und unteren Trum des Deckbandes aufweist, und dass die Stützrollen für den unteren Trum des Deckbandes in einer orthogonal zur Förderrichtung verlaufenden Ebene eine flexible Anpassung der Querschnittsform des unteren Trums des Deckbandes an die auf dem Transportband befindliche Fräsgutmenge erlauben. Die flexible Anpassung der Querschnittsform des unteren Trums an die auf dem Transportband befindliche Fräsgutmenge erfolgt dynamisch jeweils an der Stelle, an der die Stützrollen angeordnet sind.

Vorzugsweise ist vorgesehen, dass gelenkig befestigte Stützrollen des unteren Trums des Deckbandes federnd in Richtung auf das erste Transportband vorspannbar sind. Hierzu können zumindest die Stützrollen für den oberen Trum des Transportbandes und die Stützrollen für den unteren Trum des Deckbandes mehrere gelenkig miteinander gekoppelte Walzensegmente aufweisen. Dabei sind vorzugsweise die Segmente des oberen Trums des Transportbandes ortsfest gelagert, während die Stützrollen für den unteren Trum des Deckbandes beweglich gelagert sind, so dass die einzelnen Walzensegmente unterschiedliche Winkelstellungen zueinander annehmen können.

Alternativ ist es auch möglich, die Stützrollen für den unteren Trum des Deckbandes jeweils in einer V-förmigen Doppelanordnung in Förderrichtung hintereinander vorzusehen.

Die Fördergeschwindigkeit der Bänder, nämlich des Transportbandes und des mindestens einen Deckbandes kann variabel und/oder individuell einstellbar sein.

Das mindestens eine Deckband kann im Bereich des Abwurfendes vor dem Ende des Transportbandes von diesem divergieren.

Das mindestens eine Deckband kann im Bereich des Abwurfendes in Förderrichtung gesehen über das Ende des Transportbandes herausragen.

Bei einer Ausführungsform kann vorgesehen sein, dass am Abwurfende das Deckband gegenüber dem Transportband in Transportrichtung übersteht und der überstehende Teil der Deckbandes relativ zum Transportband um eine quer und parallel zur Breite des Transportbandes verlaufende Achse verschwenkbar ist oder bogenförmig um das Ende des Transportbandes geführt ist. Die Verschwenkbarkeit des überstehenden Teils des Deckbandes ermöglicht es, die Abwurfparabel des abgefrästen Materialstroms zu beeinflussen.

Bei einem solchen Ausführungsbeispiel, bei dem z.B. der untere Trum des Deckbandes bogenförmig um das Ende des Transportbandes geführt ist, besteht die Möglichkeit, die letzte Umlenkwalze des Deckbandes von einer Position, in der der untere Trum des Deckbandes bogenförmig das Ende des Transportbandes z.B. in einem Winkelbereich von ca. 90° umgibt, in eine Position zu bringen, in der sich die in Transportrichtung letzte Umlenkwalze in geradliniger Verlängerung des Deckbandes befindet.

Ja nach Position dieser Umlenkwalze kann die Wurfparabel derart verändert werden, dass die Auftreffstelle des abgefrästen Materials auf einer Ladefläche eines Transportfahrzeuges einstellbar ist.

Es kann auch vorgesehen sein, dass die Bänder eingangsseitig und ausgangsseitig jeweils eine im Wesentlichen geradlinige Umlenkwalze aufweisen, und dass wenigstens eine, der in Förderrichtung letzten Umlenkwalzen relativ zu der jeweils gegenüberliegenden Umlenkwalze verschwenkbar ist. Durch die Verstellbarkeit der Umlenkwalzen am Abwurfende besteht die Möglichkeit, den Materialstrom bei Bedarf stärker zu bündeln und ggf. die Wurfparabel trotz hoher Fördergeschwindigkeit zu verkürzen, so dass die Abwurfstelle näher an die Fördereinrichtung rückt.

Bei einem Verfahren zum Abfräsen und Abtransportieren eines abgefrästen Materialstroms mit einer erfindungsgemäßen Straßenfräsmaschine ist vorgesehen, dass das abgefräste Material zwischen dem Transportband und dem mindestens einen in einem in Förderrichtung letzten Abschnitt angeordneten oberen Deckband der Fördereinrichtung zumindest auf einem Teil der Länge des Transportbandes transportiert wird.

Dabei kann das Deckband zumindest in dem mit dem abgefrästen Material in Kontakt befindlichen Teil in Richtung auf das das abgefräste Material tragende untere Transportband federnd vorgespannt werden.

Das abgefräste Material kann in einer Transportrinne des unteren Transportbandes transportiert werden, wobei der untere Trum des oberen Deckbandes derart geführt wird, dass der Trum mit einer im Querschnitt je nach Menge des abgefrästen Materials konvexen bis konkaven Querschnittsform gegen das abgefräste Material angedrückt wird.

Die das abgefräste Material zwischen sich aufnehmenden Bänder können eingangsseitig konvergierend und/oder ausgangsseitig divergierend geführt werden.

Im Folgenden werden unter Bezugnahme auf die Zeichnungen Ausführungsbeispiele der Erfindung näher erläutert.

Es zeigen:
- Fig. 1: eine Straßenfräsmaschine,
- Fig. 2: einen Schnitt durch die Fördereinrichtung gemäß Fig. 1 in einer Längsmittelebene,
- Fig. 3: einen Schnitt entlang der Linie III-III in Fig. 2,
- Fig. 4: einen Schnitt entsprechend Fig. 3 bei beladenem Transportband,
- Fig. 5: eine Seitenansicht der Fördereinrichtung im abgeknickten Zustand,
- Fig. 6: eine alternative Gestaltung der Stützrollen für den unteren Trum des Transportbandes, und
- Fig. 7: ein Ausführungsbeispiel mit einem überstehenden und verschwenkbaren Deckband.

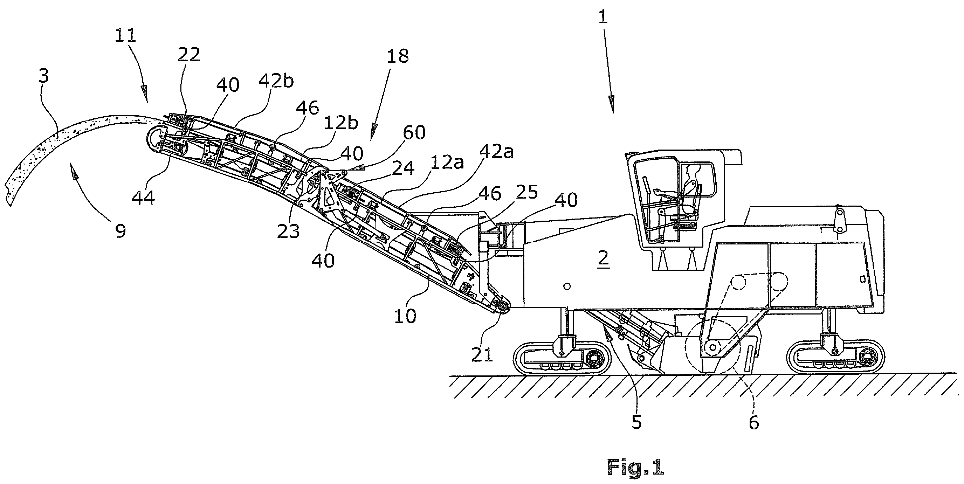

Fig. 1 zeigt eine Baumaschine 1 zum Fräsen von Boden- oder Verkehrsflächen, die auch als Kaltfräse bezeichnet wird.

Die Kaltfräse weist ein Fahrwerk mit beispielsweise vier Kettenlaufwerken auf, das den Maschinenrahmen 2 der Straßenfräsmaschine 1 trägt. Es versteht sich, dass die Kettenlaufwerke durch Räder ganz oder teilweise substituiert werden können.

In dem Maschinenrahmen 2 ist eine Fräswalze 6 gelagert, die sich quer zur Fahrtrichtung erstreckt. Die Einstellung der Frästiefe erfolgt vorzugsweise mit Hilfe der Höhenverstellung der Kettenlaufwerke über Hubsäulen. Die in Fig. 1 dargestellte Kaltfräse wird auch als Frontladerstraßenfräse bezeichnet, da sie das abgefräste Material 3 in Fahrtrichtung nach vorne auf eine Abwurfstelle auf einem Transportfahrzeug befördern kann. In Fahrtrichtung vor der Fräswalze 6 ist ein erstes Transportband 5 einer Fördereinrichtung 18 angeordnet, das das abgefräste Material 3 vorzugsweise auf ein zweites Transportband 10 überträgt. Es versteht sich, dass die Straßenfräsmaschine 1 auch nur ein einziges Transportband aufweisen kann, wobei dieses auch am Heck der Straßenfräsmaschine 1 angeordnet sein kann.

Die in Fig. 1 gezeigte Kaltfräse zeigt ein typisches Ausführungsbeispiel einer Baumaschine, bei der auch eine knickbare Fördereinrichtung 18 einsetzbar ist. Ein knickbares Transportband ist grundsätzlich bereits aus der EP 2 113 613 A1 bekannt.

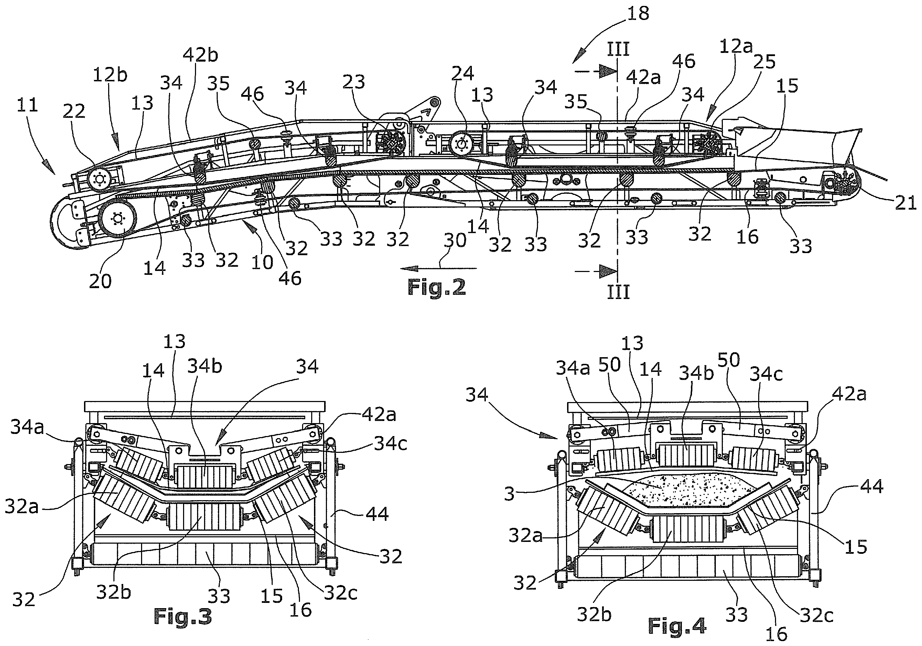

Fig. 2 zeigt einen Teilschnitt durch die Längsmittenebene der Fördereinrichtung 18, die ein unteres Transportband 10 und zwei aufeinanderfolgende obere Deckbänder 12a, 12b aufweist. Über dem Transportband 10 der Fördereinrichtung 18 ist mindestens ein Deckband 12a, 12b angeordnet, so dass abweichend von den in den Fign. gezeigten Ausführungsbeispielen auch nur ein einziges Deckband 12 über dem Transportband 10 angeordnet sein kann.

Die Transport- und Deckbänder 10, 12a, 12b sind endlos umlaufende Bänder, die um im Wesentlichen geradlinige Umlenkwalzen 20 bis 25 umlaufen, wobei die in Förderrichtung 30 vorderen Umlenkwalzen 20, 22, 24 vorzugsweise angetriebene Umlenkwalzen sein können, und wobei die in Förderrichtung 30 hinteren Umlenkwalzen (21, 23, 25) auch ballig ausgeführt sein können.

Die Bänder 10, 12a, 12b weisen jeweils einen oberen Trum 13, 15 und einen unteren Trum 14, 16 auf, wobei der untere Trum 14 des einzigen Deckbandes oder der Deckbänder 12a, 12b in Richtung auf den oberen Trum 15 des Transportbandes 10 vorgespannt sein kann.

Insgesamt kann das mindestens eine Deckband 12a, 12b in Relation zu dem Transportband 10 höhenverstellbar sein. Hierzu weist die Fördereinrichtung 18 ein Gestell 44 für das Transportband 10 und Gestelle 42a, 42b für die Deckbänder 12a, 12b auf, an denen seitlich Führungselemente 40 vorgesehen sind, die eine Höhenverstellung des mindestens einen Deckbandes 12a, 12b in Relation zu dem Transportband 10 ermöglichen.

Dabei können die Deckbänder 12a, 12b aufgrund ihres Eigengewichtes jeweils mit ihrem unteren Trum 14 auf dem Transportband 10 bzw. dem auf dem Transportband 10 transportierten abgefrästen Material 3 aufliegen.

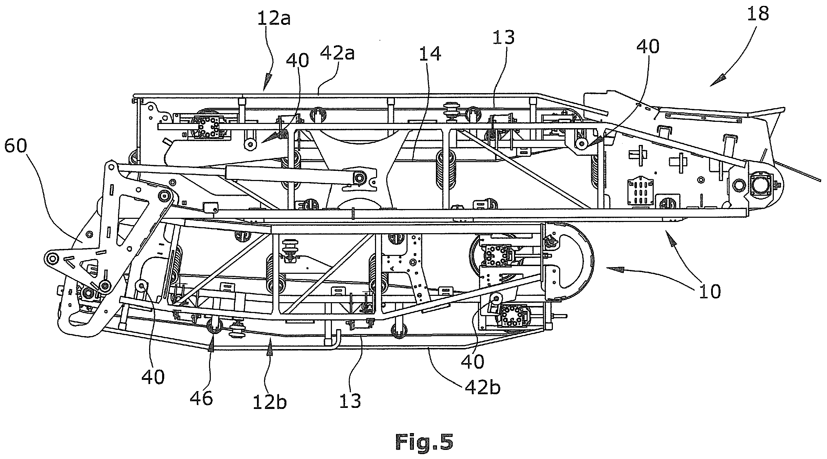

Die seitlichen Führungseinrichtungen 40 (Fig. 1 und Fig. 5), die beiderseits der Deck- und Transportbänder 10, 12a, 12b angeordnet sind, können mit Federeinrichtungen kombiniert sein, so dass die Deckbänder 12a, 12b nicht mit ihrem vollständigen Gewicht auf dem oberen Trum 15 des Transportbandes 10 aufliegen.

Selbstverständlich können die Führungseinrichtungen 40 auch so eingestellt sein, dass ein bestimmter Abstand zwischen den Gestellen 42a, 42b, 44 der Transport- und Deckbänder 10, 12a, 12b fest voreingestellt sein kann.

Die Führungselemente 40 können auch alternativ mit Federelementen kombiniert sein, die das Gestell 42a, 42b des mindestens einen Deckbandes 12a, 12b nach unten vorspannen. Wie am besten aus den Fign. 3 und 4 ersichtlich, die einen Schnitt entlang der Linie III-III in Fig. 2 darstellen, sind für den oberen Trum 15 des Transportbandes 10 vorzugsweise Stützrollen 32 vorgesehen, deren Walzensegmente 32a, 32b, 32c gelenkig miteinander verbunden sind und ein im Querschnitt konkaves Bett für das abgefräste Material 3 mit dem oberen Trum 15 erzeugen. Die Stützrollen 32 sind dabei vorzugsweise ortsfest in dem Gestell 44 angeordnet.

Der untere Trum 14 des mindestens einen Deckbandes 12a, 12b weist bewegliche Stützrollen 34 auf, die ebenfalls segmentiert sein können und gelenkig derart miteinander verbunden sind, dass sie von einer in Fig. 3 gezeigten untersten Position mit minimaler Beladung des Transportbandes 10 zu einer Position im beladenen Zustand des Transportbandes 10, wie in Fig. 4 gezeigt, wechseln können. Hierzu ist beispielsweise ein Getriebe vorgesehen, das die Stützrollen 34 in einer im Wesentlichen orthogonalen Ebene zu dem Deckband 12a bzw. 12b führt. Jede Stützrolle 34 besteht dabei beispielsweise aus drei Walzensegmenten 34a, 34b, 34c, wobei alle Walzensegmente beispielsweise von einem Viergelenkgetriebe 50 an dem Gestell 42a, 42b in der orthogonalen Ebene geführt werden.

Die Stützrollen 34 für den unteren Trum 14 des Deckbandes 12a bzw. 12b können mit Federelementen, z. B. Rosta-Blocks, gegen den unteren Trum 14 vorgespannt sein.

Die oberen Stützrollen 35 des mindestens einen Deckbandes 12a, 12b und die unteren Stützrollen 33 des Transportbandes 10 können geradlinige Walzen sein, die ortsfest zu den Gestellen 42a, 42b, 44 gelagert sind.

Darüber hinaus können die Transport- bzw. Deckbänder 10, 12a, 12b seitliche Führungseinrichtungen 46 aufweisen, die jeweils am oberen Trum 13, des mindestens einen Deckbandes bzw. am unteren Trum 16, des Transportbandes in einer bestimmten Höhenlage relativ zu den Gestellen 42a, 42b, 44 angeordnet sind, um eine seitliche Führung zu gewährleisten. Die Deckbänder 12a, 12b sind eingangsseitig zwischen den Umlenkwalzen 23,25 und der ersten Stützrolle 34 vorzugsweise konvergierend zu dem Transportband 10 geführt, während sie ausgangsseitig in Richtung auf die in Förderrichtung 30 vorderen Umlenkwalzen 22, 24 vorzugsweise divergierend geführt sind.

Dabei kann vorzugsweise die in Förderrichtung 30 vordere Umlenkwalze 22 des in Förderrichtung 30 letzten Deckbandes 12b relativ zur Umlenkwalze 20 des Transportbandes 10 schwenkbar angeordnet sein, so dass die Austrittsrichtung für das abgefräste Material 3 zwischen dem Transportband 10 und dem mindestens einen letzten Deckband 12b unterschiedlich eingestellt werden kann. Alternativ können auch die Umlenkwalze 20 des Transportbandes 10 oder beide Umlenkwalzen 20, 22 verschwenkbar sein.

Der obere Trum 15 des Transportbandes 10 und der jeweils untere Trum 14 des mindestens einen Deckbandes 12a, 12b bewegen sich in Förderrichtung 30 mit gleicher, vorzugsweise einstellbarer Fördergeschwindigkeit oder mit einer einstellbaren unterschiedlichen Fördergeschwindigkeit. Mit Hilfe der Fördergeschwindigkeit und der Höheneinstellung der Fördereinrichtung 18 sowie der Einstellung des Abstandes bzw. des Schwenkwinkels zwischen dem letzten Deckband 12b und dem Transportband 10 kann die Form der Wurfparabel 9 am Abwurfende 11 beeinflusst werden.

Wie aus Fig. 5 ersichtlich ist, kann bei einem bevorzugten Ausführungsbeispiel der vordere Teil 17 der Fördereinrichtung 18 nach unten abgeknickt werden und in einer aus Fig. 5 ersichtlichen Endposition für Transportzwecke arretiert werden. Ein Beispiel für ein hierfür geeignetes Schwenkgetriebe 60 ist grundsätzlich in der EP 2 113 613 A beschrieben. Vorzugsweise ist vorgesehen, dass für den abgeknickten vorderen Teil 17 der Fördereinrichtung 18 ein eigenes Deckband 12b vorgesehen ist. Diese Aufteilung des über dem Transportband 10 angeordneten Deckbandes 12a, 12b ermöglicht die Beibehaltung der Abknickmöglichkeit für das Transportband 10.

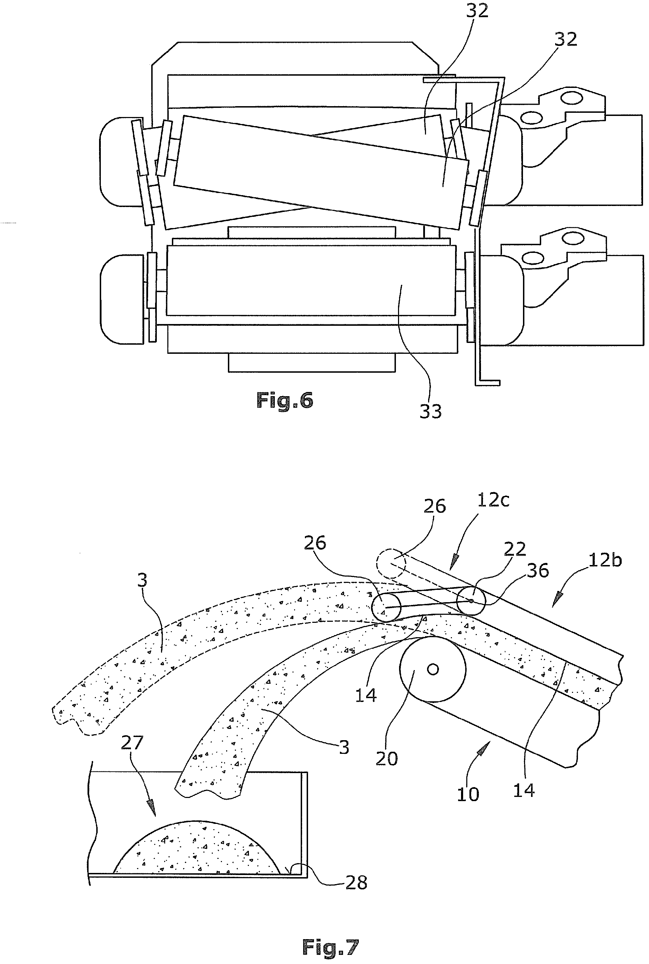

Fig. 6 zeigt eine alternative Ausführungsform für die Stützrollen 32 des oberen Trums 15 des Transportbandes 10.

Bei diesem Ausführungsbeispiel wird eine Doppelanordnung von geradlinigen Stützwalzen 32 verwendet, die unmittelbar hintereinander in Förderrichtung 30 angeordnet sind und gemeinsam eine in Förderrichtung 30 V-förmige Abstützung des oberen Trums 15 des Transportbandes 10 ermöglichen.

Die Transport- und Deckbänder 10, 12a, 12b weisen eine Profilierung auf den dem abgefrästen Material 3 zugewandten Flächen auf, die den Schlupf auf der Transportoberfläche minimieren.

Fig. 7 zeigt ein Ausführungsbeispiel, bei dem ein überstehender Teil 12c des Deckbandes 12b verschwenkbar ist, um die Wurfparabel des abgefrästen Materialstroms 3 auf eine gewünschte Abwurfstelle 27 einzustellen.

Das obere Deckband 12b ist am Abwurfende 11 über die Umlenkwalze 22 hinaus verlängert und weist mit Abstand von der Umlenkwalze 22 eine weitere Umlenkwalze 26 auf, die in Richtung auf das Transportband 10 um eine normalerweise horizontale Achse 36, vorzugsweise koaxial zur Achse der Umlenkwalze 22 schwenkbar ist.

Es versteht sich, dass abweichend von der Darstellung in Fig. 7 der gegenüber dem Transportband 10 überstehende Teil 12c auch länger sein kann, derart, dass der untere Trum 14 des Deckbandes 12b, 12c das Transportband 10 im Bereich der Umlenkwalze 20 z.B. bis zu 90° bogenförmig umschlingen kann.

Die Umlenkwalze 26 kann auch, wie in Fig. 7 gestrichelt dargestellt, in eine Position gebracht werden, in der der schwenkbare Teil 12c des Deckbandes 12b in geradliniger Verlängerung zu dem restlichen Deckband 12b verläuft. In diesem Fall ergibt sich für das abgefräste Material 3 eine andere Wurfparabel, die in Fig. 7 gestrichelt dargestellt ist.

Es ist daher möglich, mit der Schwenkstellung des überstehenden Teils 12c die Lage der Abwurfstelle 27 auf einer Ladefläche 28 eines Transportfahrzeuges zu bestimmen.

## Patentansprüche

1. Baumaschine (1), insbesondere Kaltfräse, Recycler oder Surface Miner, zum Bearbeiten von Bodenoberflächen, mit einer an einem Maschinenrahmen (2) gelagerten Fräswalze (8) und einer Fördereinrichtung (18), die das abgefräste Material (3) von der Fräswalze (8) im fahrenden Arbeitsbetrieb übernimmt und über wenigstens ein, endlos umlaufendes Transportband (10) in Förderrichtung (30) an einem Abwurfende (11) entlang einer Wurfparabel (9) auf eine Abwurfstelle ablädt,
**dadurch gekennzeichnet, dass**
zumindest der in Förderrichtung (30) letzte Abschnitt der Fördereinrichtung (18) mindestens ein endlos umlaufendes, über dem Transportband (10) angeordnetes Deckband (12a, 12b) aufweist, das sich im Wesentlichen parallel zu dem Transportband (10) erstreckt und gegen das abgefräste Material (3) auf dem Transportband (10) zumindest in einem Teilstück der Länge des Transportbandes (10) anliegt.

2. Baumaschine nach Anspruch 1, **dadurch gekennzeichnet, dass** die Fördereinrichtung (18) oder der letzte Abschnitt der Fördereinrichtung (18) hinsichtlich Neigung und/oder seitlicher Ausrichtung schwenkbar an dem Maschinenrahmen (2) angeordnet ist.

3. Baumaschine (1) nach Anspruch 1, **dadurch gekennzeichnet, dass** das Deckband (12a, 12b) höhenverstellbar und/oder in Richtung auf das Transportband (10) vorspannbar gelagert ist.

4. Baumaschine (1) nach einem der Ansprüche 1 bis 3, **dadurch gekennzeichnet, dass** auf dem Transportband (10) zwei aufeinanderfolgende Deckbänder (12a, 12b) angeordnet sind.

5. Baumaschine (1) nach einem der Ansprüche 1 bis 4, **dadurch gekennzeichnet, dass** das Transportband (10) abknickbar ist, wobei in einer Transportstellung ein vorderer Teil (17) des Transportbandes (10) nach unten verschwenkbar ist, und dass vorzugsweise im Bereich des abknickbaren vorderen Teils (17) des Transportbandes (10) ein Deckband (12b) angeordnet ist.

6. Baumaschine (1) nach einem der Ansprüche 1 bis 5, **dadurch gekennzeichnet, dass** das Transportband (10) Stützrollen (32, 33) für den oberen und unteren Trum (15, 16) aufweist, und dass die Stützrollen (32) für den oberen Trum (15) des Transportbandes (10) in einer orthogonal zur Förderrichtung (30) verlaufenden Ebene auf dem oberen Trum (15) des Transportbandes (10) eine im Querschnitt konkave Transportrinne bilden.

7. Baumaschine (1) nach einem der Ansprüche 1 bis 6, **dadurch gekennzeichnet, dass** das mindestens eine Deckband (12a, 12b) Stützrollen (34, 35) für den oberen und unteren Trum (13, 14) des Deckbandes (12a, 12b) aufweist, und dass die Stützrollen (34) für den unteren Trum (14) des Deckbandes (12a, 12b) in einer orthogonal zur Förderrichtung (30) verlaufenden Ebene eine flexible Anpassung der Querschnittsform des unteren Trums (14) des Deckbandes (12a, 12b) an die auf dem Transportband (10) befindliche Fräsgutmenge erlauben.

8. Straßenfräsmaschine (1) nach einem der Ansprüche 6 oder 7, **dadurch gekennzeichnet, dass** zumindest die Stützrollen (32) für den oberen Trum (15) des Transportbandes (10) und/oder die Stützrollen (34) für den unteren Trum (14) des Deckbandes (12a, 12b) mehrere gelenkig miteinander gekoppelte Walzensegmente aufweisen.

9. Baumaschine (1) nach einem der Ansprüche 1 bis 8, **dadurch gekennzeichnet, dass** das Deckband (12a, 12b) ausgangsseitig von dem Transportband (10) divergiert und/oder eingangsseitig zu dem Transportband konvergiert.

10. Baumaschine (1) nach einem der Ansprüche 1 bis 9, **dadurch gekennzeichnet, dass** am Abwurfende (11) das Deckband (12b) gegenüber dem Transportband (10) in Transportrichtung übersteht und der überstehende Teil des Deckbandes (12b) relativ zum Transportband (10) um eine quer zur Länge und parallel zur Breite des Transportbandes (10) verlaufende Achse (36) verschwenkbar ist oder bogenförmig um das Ende des Transportbandes (10) in unterschiedliche Schwenkstellungen überführbar ist.

11. Verfahren zum Abfräsen und Abtransportieren eines abgefrästen Materialstroms mit einer Baumaschine (1), insbesondere Kaltfräse, Recycler oder Surface Miner, gemäß einem der Ansprüche 1 bis 10, bei der das abgefräste Material (3) im Fräsbetrieb von der Fräswalze (6) übernommen wird und an einem Abwurfende (12) der hinsichtlich Fördergeschwindigkeit einstellbaren Fördereinrichtung (18) entlang einer Wurfparabel (9) auf eine Abwurfstelle abgeladen wird,
**dadurch gekennzeichnet, dass**
das abgefräste Material (3) zwischen dem unteren Transportband (10) und dem mindestens einen in einem in Förderrichtung letzten Abschnitt angeordneten oberen Deckband (12a, 12b) der Fördereinrichtung (18) zumindest auf einem Teil der Länge des Transportbandes (10) transportiert wird.

12. Verfahren nach Anspruch 11, **dadurch gekennzeichnet, dass** das Deckband (12a, 12b) zumindest in dem mit dem abgefrästen Material (3) in Kontakt befindlichen Teil in Richtung auf das abgefräste Material (3) tragende Transportband (10) federnd vorgespannt wird.

13. Verfahren nach Anspruch 11 oder 12, **dadurch gekennzeichnet, dass** zum Transport der Straßenfräsmaschine (1) ein vorderer Teil (17) der Fördereinrichtung (18) abgeknickt und arretiert wird.

14. Verfahren nach einem der Ansprüche 11 bis 13, **dadurch gekennzeichnet, dass** das abgefräste Material (3) in einer Transportrinne des unteren Transportbandes (10) transportiert wird und dass der untere Trum (14) des oberen Deckbandes (12a, 12b) derart geführt wird, dass der Trum (14) mit einer im Querschnitt je nach Menge des abgefrästen Materials konvexen bis konkaven Querschnittsform gegen das abgefräste Material (3) angedrückt wird.

15. Verfahren nach einem der Ansprüche 11 bis 14, **dadurch gekennzeichnet, dass** bei einem gegenüber dem Transportband (10) in Transportrichtung überstehenden Deckband (12b), der überstehende Teil verschwenkt wird um die Wurfparabel des abgefrästen Materialstroms auf eine gewünschte Abwurfstelle einzustellen.

## Claims

1. Construction machine (1), in particular cold milling machine, recycler or surface miner, for working ground surfaces, comprising a milling drum (8) supported at a machine frame (2) and a conveying device (18) which accepts the milled-off material (3) from the milling drum (8) during the working operation and unloads it onto a point of discharge via at least one continuously revolving transport belt (10), at a discharge end (11) in conveying direction (30), along a parabolic trajectory (9),
**characterized in that**
as a minimum, the last section of the conveying device (18) as seen in conveying direction (30) comprises at least one continuously revolving cover belt (12a, 12b) arranged above the transport belt (10), said cover belt extending essentially parallel to the transport belt (10) and resting against the milled-off material (3) on the transport belt (10) at least in a partial section of the length of the transport belt (10).

2. Construction machine in accordance with claim 1, **characterized in that** the conveying device (18) or the last section of the conveying device (18) is arranged to pivot at the machine frame (2) in terms of inclination and/or lateral alignment.

3. Construction machine (1) in accordance with claim 1, **characterized in that** the cover belt (12a, 12b) is adjustable in height and/or is supported in a pre-tensionable fashion in the direction towards the transport belt (10).

4. Construction machine (1) in accordance with any one of the claims 1 to 3, **characterized in that** two successive cover belts (12a, 12b) are arranged on the transport belt (10).

5. Construction machine (1) in accordance with any one of the claims 1 to 4, **characterized in that** the transport belt (10) is of foldable design, with a front section (17) of the transport belt (10) being pivotable downwards when in a transport position, and that a cover belt (12b) is preferably arranged in the area of the foldable front section (17) of the transport belt (10).

6. Construction machine (1) in accordance with any one of the claims 1 to 5, **characterized in that** the transport belt (10) comprises support rollers (32, 33) for the upper and lower strands (15, 16), and that the support rollers (32) for the upper strand (15) of the transport belt (10), in a plane extending orthogonal to the conveying direction (30), form a transport channel with a concave cross-section on the upper strand (15) of the transport belt (10).

7. Construction machine (1) in accordance with any one of the claims 1 to 6, **characterized in that** the at least one cover belt (12a, 12b) comprises support rollers (34, 35) for the upper and lower strands (13, 14) of the cover belt (12a, 12b), and that the support rollers (34) for the lower strand (14) of the cover belt (12a, 12b), in a plane extending orthogonal to the conveying direction (30), allow a flexible adjustment of the cross-sectional shape of the lower strand (14) of the cover belt (12a, 12b) to the quantity of milled material present on the transport belt (10).

8. Construction machine (1) in accordance with any one of the claims 6 or 7, **characterized in that**, as a minimum, the support rollers (32) for the upper strand (15) of the transport belt (10) and/or the support rollers (34) for the lower strand (14) of the cover belt (12a, 12b) comprise multiple roller segments coupled to one another in an articulated fashion.

9. Construction machine (1) in accordance with any one of the claims 1 to 8, **characterized in that** the cover belt (12a, 12b), on the outlet side, diverges from the transport belt (10) and/or, on the inlet side, converges towards the transport belt.

10. Construction machine (1) in accordance with any one of the claims 1 to 9, **characterized in that**, at the discharge end (11), the cover belt (12b) projects vis-à-vis the transport belt (10) as seen in the direction of transport, and the projecting section of the cover belt (12b) is pivotable, relative to the transport belt (10), about an axis (36) extending transverse and parallel to the transport belt (10), or is transferable, in the shape of an arc, about the end of the transport belt (10) into different pivoting positions.

11. Method for milling off and transporting away a milled-off stream of material of a construction machine (1) in accordance with any one of the claims 1 to 10, in particular cold milling machine, recycler or surface miner, in which the milled-off material (3) is accepted from the milling drum (6) during the milling operation and is unloaded onto a point of discharge at a discharge end (12) of a conveying device (18) adjustable in terms of conveying speed along a parabolic trajectory (9),
**characterized in that**
the milled-off material (3) is transported, at least on a part of the length of the transport belt (10), between the lower transport belt (10) and the at least one upper cover belt (12a, 12b) being the last one in conveying direction,

12. Method in accordance with claim 11, **characterized in that** the cover belt (12a, 12b) is pre-tensioned resiliently in the direction towards the transport belt (10) carrying the milled-off material (3) at least **in that** part which is in contact with the milled-off material (3).

13. Method in accordance with claim 11 or 12, **characterized in that**, for transport of the road milling machine (1), a front section (17) of the conveying device (18) is folded and locked.

14. Method in accordance with any one of the claims 11 to 13, **characterized in that** the milled-off material (3) is transported in a transport channel of the lower transport belt (10), and that the lower strand (14) of the upper cover belt (12a, 12b) is guided in such a fashion that the strand (14), which has a convex to concave cross-sectional shape depending on the quantity of the milled-off material, is pressed against the milled-off material (3).

15. Method in accordance with any one of the claims 11 to 14, **characterized in that**, with a cover belt (12b) projecting vis-à-vis the transport belt (10) in the direction of transport, the projecting section is pivoted in order to adjust the parabolic trajectory of the milled-off stream of material to a specified point of discharge.

## Revendications

1. Machine de chantier (1), en particulier fraiseuse à froid, recycleur ou surface miner, destinée au traitement de surfaces de sol, avec un tambour de fraisage (8) supporté sur un châssis de machine (2) et avec un système de transport (18) qui, dans le mode de travail mobile, prend en charge le matériau (3) enlevé par fraisage à partir du tambour de fraisage (8) et le décharge à un emplacement de déversement par le biais d'au moins une bande de transport (10) qui tourne sans fin à une extrémité de déversement (11) dans la direction de transport (30) le long d'une parabole d'éjection (9),
**caractérisée en ce que**
au moins le dernier tronçon du système de transport (18) dans la direction de transport (30) présente au moins une bande de couverture (12a, 12b) tournant sans fin, disposée sur la bande de transport (10), qui s'étend essentiellement parallèlement à la bande de transport (10) et est adjacente au matériau (3) enlevé par fraisage sur la bande de transport (10) au moins sur une fraction de la longueur de la bande de transport (10).

2. Machine de chantier selon la revendication 1, **caractérisée en ce que** le système de transport (18) ou le dernier tronçon du système de transport (18) est, en ce qui concerne l'inclinaison et/ou l'orientation latérale, disposé de façon pivotante sur le châssis de machine (2).

3. Machine de chantier (1) selon la revendication 1, **caractérisée en ce que** la bande de couverture (12a, 12b) est supportée de façon réglable en hauteur et/ou précontrainte en direction de la bande de transport (10).

4. Machine de chantier (1) selon l'une des revendications 1 à 3, **caractérisée en ce que** deux bandes de couverture (12a, 12b) qui se suivent sont disposées sur la bande de transport (10).

5. Machine de chantier (1) selon l'une des revendications 1 à 4, **caractérisée en ce que** la bande de transport (10) peut être pliée, une partie avant (17) de la bande de transport (10) pouvant, dans une position de transport, pivoter vers le bas, et **en ce qu'**une bande de couverture (12b) est disposée de préférence dans la zone de la partie avant (17) pliable de la bande de transport (10).

6. Machine de chantier (1) selon l'une des revendications 1 à 5, **caractérisée en ce que** la bande de transport (10) présente des rouleaux de support (32, 33) pour le brin supérieur et inférieur (15, 16), et **en ce que** les rouleaux de support (32) pour le brin supérieur (15) de la bande de transport (10) forment, dans un plan à angle droit par rapport à la direction de transport (30), sur le brin supérieur (15) de la bande de transport (10), une goulotte de transport de section transversale concave.

7. Machine de chantier (1) selon l'une des revendications 1 à 6, **caractérisée en ce que** la bande de couverture (12a, 12b) au moins au nombre de un présente des rouleaux de support (34, 35) pour le brin supérieur et inférieur (13, 14) de la bande de couverture (12a, 12b), et **en ce que** les rouleaux de support (34) pour le brin inférieur (14) de la bande de couverture (12a, 12b) permettent, dans un plan à angle droit par rapport à la direction de transport (30), une adaptation flexible de la forme de section transversale du brin inférieur (14) de la bande de couverture (12a, 12b) à la quantité de matériau fraisé située sur la bande de transport (10).

8. Fraiseuse routière (1) selon l'une des revendications 6 ou 7, **caractérisée en ce qu'**au moins les rouleaux de support (32) pour le brin supérieur (15) de la bande de transport (10) et/ou les rouleaux de support (34) pour le brin inférieur (14) de la bande de couverture (12a, 12b) présentent plusieurs segments de tambour couplés les uns autres de façon articulée.

9. Machine de chantier (1) selon l'une des revendications 1 à 8, **caractérisée en ce que**, côté sortie, la bande de couverture (12a, 12b) diverge de la bande de transport (10) et/ou, côté entrée, converge vers la bande de transport.

10. Machine de chantier (1) selon l'une des revendications 1 à 9, **caractérisée en ce que**, à l'extrémité de déversement (11), la bande de couverture (12b) dépasse de la bande de transport (10) dans la direction de transport, et la partie de la bande de couverture (12b) qui dépasse peut pivoter relativement à la bande de transport (10) autour d'un axe (36) transversal à la longueur et parallèle à la largeur de la bande de transport (10) ou peut être transférée dans différentes positions de pivotement en arc autour de l'extrémité de la bande de transport (10).

11. Procédé de fraisage et d'évacuation d'un flux de matériau enlevé par fraisage avec une machine de chantier (1), en particulier fraiseuse à froid, recycleur ou surface miner, selon l'une des revendications 1 à 10,
dans laquelle le matériau (3) enlevé par fraisage est, dans le mode fraisage, pris en charge à partir du tambour de fraisage (6) et déchargé le long d'une parabole d'éjection (9) à un emplacement de déversement à une extrémité de déversement (12) du système de transport (18) réglable en ce qui concerne la vitesse de transport,
**caractérisé en ce que**
**que** le matériau (3) enlevé par fraisage est transporté, au moins sur une partie de la longueur de la bande de transport (10), entre la bande de transport (10) inférieure et la bande de couverture (12a, 12b) supérieure au moins au nombre de un du système de transport (18) disposée dans un dernier tronçon dans la direction de transport.

12. Procédé selon la revendication 11, **caractérisé en ce que**, au moins dans la partie en contact avec le matériau (3) enlevé par fraisage, la bande de couverture (12a, 12b) est précontrainte par ressort en direction de la bande de transport (10) portant le matériau (3) enlevé par fraisage.

13. Procédé selon la revendication 11 ou 12, **caractérisé en ce que**, pour le transport de la fraiseuse routière (1), une partie avant (17) du système de transport (18) est pliée et bloquée.

14. Procédé selon l'une des revendications 11 à 13, **caractérisé en ce que** le matériau (3) enlevé par fraisage est transporté dans une goulotte de transport de la bande de transport (10) inférieure, et **en ce que** le brin inférieur (14) de la bande de couverture (12a, 12b) supérieure est guidé de telle sorte que le brin (14) est pressé contre le matériau (3) enlevé par fraisage avec une forme de section transversale dont la section transversale est convexe à concave en fonction de quantité de matériau (3) enlevé par fraisage.

15. Procédé selon l'une des revendications 11 à 14, **caractérisé en ce que**, dans le cas d'une bande de couverture (12b) qui dépasse de la bande de transport (10) dans la direction de transport, la partie qui dépasse est amenée à pivoter pour régler sur l'emplacement de déversement souhaité la parabole d'éjection du flux de matériau enlevé par fraisage.
